# EUROPEAN PATENT APPLICATION

(11) **EP 2 100 726 A1**
(43) Date of publication of application: **16.09.2009**
(21) Application number: 08405071.5
(22) Date of filing: 13.03.2008
(51) Int. Cl.: B32B 27/00, B65D 65/40, B65D 77/20

(54) **Lid film for closing containers**

(71) Applicant: Alcan Technology & Management Ltd., 8212 Neuhausen am Rheinfall (CH)
(72) Inventor: Jacobsen, Sven, 29683 Bad Fallingbostel (DE); Bevilacqua, Markus, 8213 Neunkirch (CH); Ménard, Rico, 9533 Kirchberg (CH)

(57) **Abstract**

A lid film (30) for closing containers has a biaxially oriented plastic layer as outer layer (36) and a sealable layer as inner layer (44), and middle layers (37-43). The outer layer (36), the inner layer (44) and the middle layers (37-43) are coextruded to form a both direction stretched film, and the multilayer film (10) has a maximum degree of dimensional change of 2% at most when exposed to temperature.

## Description

The invention relates to a lid film for closing containers, with a biaxially oriented plastic layer as outer layer and a sealable layer as inner layer, and optionally at least one middle layer. The invention also relates to a process suitable for manufacturing the lid film.

Known lid films for closing plastic containers by thermosealing the film to the rim of the container are coated or uncoated aluminium films as well as different laminates made of polyester or paper and aluminium. For closing containers or cups generally made of polystyrene (PS) or polypropylene (PP) containing yoghurt and suchlike dairy products, a closing membrane provided with a grip flap is peelably sealed to a ring-shaped rim arranged at the container opening.

A lid film known under the trade name MIXPAP for closing yoghurt cups consists of a biaxially stretched and if necessary metallised polyethyleneterephthalate (PET) film connected via an adhesive layer to a printed and overlacquered paper layer later forming the outer side of the closing membrane. The surface of the PET film later forming the inner side of the closing membrane is lacquered with a sealing lacquer. In a paper free option of the MIXPAP lid film a corresponding thicker PET film provided with a metallised surface as light protective or for optical reasons is often used to compensate the reduced stability when paper is omitted.

To increase the tear resistance upon opening of the yoghurt cup by tearing off the closing membrane, with the paper free option of the MIXPAP lid film it is necessary to use an isotropic polyester film, e.g. a PET film, with similar mechanical properties in all directions. In the process used today for the production of PET films a film is formed by the cast film extrusion technology, and subsequently the cast PET film is biaxially oriented by stretching the film sequentially in the longitudinal or machine direction (MD) and in the transverse direction (TD) in a tenter frame. However, not all of the available width of a biaxially oriented PET film made by the tenter frame sequential process can be used for the production of lid film with the required isotropic properties.

In some cases it is possible to print the biaxially oriented PET film on one side and lacquer the other side with a suitable sealing lacquer sealable to PS and PP, respectively. In other cases, mainly for a small amount of lid film to be printed - which in practice applies for the majority of the cases - the sealing lacquer is e.g. applied in a first processing step and the printing is done later on a smaller line.

Lid film laminates consisting of two PET films as support layer and a sealable layer arranged on the support layer are e.g. known from EP 1 588 845 A1. Such laminates are normally laminated using a two component adhesive system and/or extrusion-lamination, respectively. A biaxially oriented PET film forming the outer layer is used as a printing support, providing a high-gloss surface and a good thermal resistance. Another oriented or unoriented PET film can be arranged in the middle as a barrier layer support or a layer for improving mechanical properties, such as e.g. strength. The inner layer generally consists of an unoriented, mono- or coextruded heat sealable film manufactured e.g. in the blow or cast process. In the production process via adhesive lamination the individual films are connected to the laminate using solvent-containing or solvent-free two-component adhesives, often in two or more processing steps. This process has several disadvantages: the adhesive lamination process is not harmless due to solvent wastage and solvent recycling both from an economical and ecological view. Other risk factors are e.g. primary aromatic amines which can migrate into the packaged good due to adhesive which has not fully reacted. Therefore, a process which does not include reactive chemistry would be desirable. A partial solution of this problem is the production process via extrusion lamination or extrusion coating, respectively. Here, the adhesive function is taken over by a polymer melt applied between the PET films and - depending on the requirements - polyethylene or a polyethylene based acidic, anhydrous acidic or acrylic copolymer is used as an adhesion donor. In addition, the sealing layer may be applied to the inner side of the laminate as an extruded film by extrusion coating. With higher requirements to the laminate, so-called solvent-containing primers are necessary as tie layers, which complicate the process in view of the logistics of the raw materials. A substantial disadvantage of the adhesive lamination is a significant limitation of the functionality of the sealing film which is obtainable e.g. with coextruded cast or blown films. A process creating a multi layer film suitable for lids solely from the melt in one production step without the need of raw material handling from a solvent would therefore be desirable.

The finished pack properties, such as the feel of the surface or haptics, form stability, strength etc., are achieved by a corresponding combination of the layers regarding arrangement and thickness. The variation range in the domain of oriented films is limited e.g. in regard to available thickness and variety. Therefore, e.g. biaxially oriented PET films with a thickness of less than 12 µm can not be produced economically by using conventional processes. This leads to solutions which function from a technical point of view, but regarding the corresponding pack properties, such as thermally resistant outer layer, sealability etc., the necessary material consumption is unproportionally high. Therefore, in order to achieve the desired finished pack properties, suitable multi layer films for lids which could be produced in a single process step with easy adjustable layer structure both in sequence and thickness are desirable.

Biaxially stretched polymeric multi-layer films can be produced via blown film extrusion by forming two or three bubbles. The process is called "double bubble (2B)" and "triple bubble (3B)" process, respectively. The blown film extrusion with three bubbles, i.e. the "triple bubble process", as explained in the following, is herein also named "3B process" and films produced with the 3B process are called "3B films".

In the 3B process, a polymer mass is extruded through a ring-shaped nozzle or circular extrusion die forming a thick tube in the form of a monolayer or multilayer film, calibrated to an exact diameter after leaving the nozzle and thereafter quenched.

Subsequently, the tube is heated to a selected stretching temperature and in a further step inflated with air or another suitable gas between two pairs of nip rolls to enlarge the diameter of the bubble, thereby forming a second bubble and being stretched in transverse direction (TD). The stretching in longitudinal or machine direction (MD) is carried out by adjusting a different rotation speed of the nip rolls, thereby limiting the length of the second bubble in its longitudinal direction. The tube expanded to a bubble is in this way transported with a higher speed compared to the extrusion speed so that its orientation is maintained in transverse and machine direction, respectively.

The stretching process, applied on the film during the first two bubble steps, introduces some mechanical stress in the film. Consequence is the tendency of the film to shrink back, close to its initial dimension, as soon as heated to temperatures similar to the temperatures applied during the stretching process in the second bubble.

To control the mechanical tension introduced in the film by the biaxial orientation and the following rapid quench, the film is expanded to a third bubble and fixed in the inflated state, thereby maintaining a controlled temperature and a controlled inner pressure of the bubble. This heat treatment of the third bubble contributes to the flatness especially of multilayer films, thereby maintaining high stability and good mechanical strength obtained by biaxial orientation. An additional advantage of the third bubble process is to control the film residual mechanical stress and, consequently, the shrinking properties of the final package if heated afterward.

Main application for 2B and 3B webs are shrink films for vacuum skin packaging. Shrink behaviours are targeted in order to allow minimal headspace in packaging of foodstuffs.

From EP 1 410 902 A1, WO 2004/080805 A2, WO 01/03922 A1 and WO 2004/110755 A1 multilayer films produced by the 2B and 3B process are known as so called shrink films for airtight packaging of foodstuffs, the film during the shrinking process snuggling closely to the goods to be packed without forming air containing microcavities. Particularly for packaging large pieces of meat including bones, a tube continuously manufactured using the 2B or 3B process is divided into individual tube sections. Each tube section is first closed at one of its tube openings by heat sealing. The pouch produced in this way and still being open on one side is closed after filling of the goods to be packed by a second heat sealing and thereafter shrinked by applying heat until the pouch film fully snuggles the filling. The degree of shrinking of the multilayer films is typically between 20 and 60 %.

Due to the heavy shrinking of 3B films by exposing to high temperature, until today the use of these films in packaging was limited to the aforementioned use of the shrinking process for the packaging of products where a form-fit wrapping is desired.

The object of the present invention is to provide a lid film of the kind described at the beginning by means of which the support layer provided with the sealable layer can be manufactured without the disadvantages of the prior art processes.

That objective is achieved by way of the invention in that the outer layer, the inner layer and, if present, the middle layer/s are coextruded to form a biaxially oriented 3B film, and the lid film has a maximum degree of shrinking of 2% at most when exposed to 140°C.

A process suitable for manufacturing the lid film is characterized in that the outer layer, the inner layer and, if present, the middle layer/s are coextruded to form a biaxially oriented triple bubble (3B) film, and time and temperature in the third bubble are selected to achieve a maximum degree of shrinking of the 3B film of 2% at most when the lid film is exposed to 140 °C.

The setting and adjustment of time and temperature conditions in the third bubble to achieve the required low degree of shrinking of the 3B film can be determined by a person skilled in the art.

A practically negligible shrinking is intended. Preferably, the admissible maximum degree of shrinking of the 3B films is 1% at most when exposed to a temperature of 140 °C.

The 3B films used according to the present invention are thermally stabilized and fixed, respectively. Therewith it is assured that the films will not shrink or curl during additional processing steps such as e.g. sealing of closing membranes to cups, during printing or during the later sterilization process with long lasting high temperature exposure having an impact on the films.

With the 3B Coextrusion process according to the present invention the deformation of the material in the second bubble results in films that behave isotropic over the whole surface area so that practically the whole 3B film production can be processed to lid films.

The coextrusion via the 3B process of all layers necessary for the manufacture of lid film in one process operation leads to saving one or more process steps and therefore also to reduced costs in comparison with conventional production processes for lid films, in particularly for small printing quantities.

A significant advantage of the 3B films according to the present invention in comparison to conventionally manufactured films and laminates, respectively, is, among others, the following. Due to the fact that using the 3B coextrusion process films with biaxially oriented layers of substantially lower thickness can be produced, which leads to substantial material savings. Using a 3B process, films with a biaxially oriented PET-layer having a thickness of e.g. 2 to 12 µm are possible. On the other hand, thick sealing layers, which could not be applied economically to conventionally manufactured lid films by lacquering, are possible.

Another advantage is the possibility of dyeing an inner layer of the film, thus preventing contamination of the sealing layer with dye when winding the film. The same way the outer layer of the film may be whitened to have a white background for later printing the outer side of the film.

Still another advantage of the lid films manufactured according to the present invention is that the functionalities of high puncture resistance and good barrier properties can be created in one single process step.

Further advantages are higher operational safety, better environmental conditions and reduced process costs by avoiding reactive adhesives and solvents during the production process. Still another advantage of the multilayer films manufactured according to the present invention is the omission of the curing times for adhesively bonded laminates which in turn leads to time and cost savings.

The 3B film produced with the 3B process is slit and wound in a roll. For an additional lacquering, printing, overlacquering and/or for carrying out other additional process steps in order to achieve technological and optical properties, the 3B film tube manufactured with the 3B process can be cut into a desired width in order to carry out the further processing steps, wound, supplied to the further processing steps and subsequently processed directly into closing membranes.

The 3B film used as a lid film has preferably one of the following layer configurations:
PET_{white} : sealing layer
PETₜᵣₐₙₛₚₐᵣₑₙₜ : sealing layer
PET_{white} : PETₜᵣₐₙₛₚₐᵣₑₙₜ : sealing layer
PETₜᵣₐₙₛₚₐᵣₑₙₜ : PET_{white} : sealing layer

The white or transparent, outermost PET film is used as printing support. The content of titanium dioxide (TiO₂) in the white PET film leads to an additional advantage, namely an improved cutting of the lid film when cutting out the closing membranes.

Between the sealing layer and the adjacent PET layer a tie layer, in particular a tie layer (t) with a material on the basis of maleic acid anhydride (MAH), acrylate or carbonic acids can be arranged.

Other 3B film suitable for use as a lid film have the following preferred layer configuration:
PET : tie : PA : time : sealing layer
PET : tie : PA : EVOH : PA : tie : sealing layer

Due to the PA layers the film has excellent tear and puncture resistance. The EVOH layer exhibits an improved oxygen barrier. The PET and/or PA layer may be white or transparent.

The composition of the sealing layer is adapted to the material of the container to be closed. The sealing layer preferably contains a material selected of the group of homo- or copolymers consisting of polyolefines (PO), particularly polyethylene (PE) or polypropylene (PP), polyamide (PA), polyesters, as well as ionomeres (ION), hotmelt adhesive, particularly on the basis of ethylene vinylacetate copolymer (EVA), ethylene butyl acrylate (EBA), ethylene methyl acrylate (EMA), and blends of the aforementioned materials.

The 3B film can be printed and/or overlacquered with a thermo-protective lacquer.

Under certain circumstances it may be reasonable to provide a film manufactured by the 3B process with a barrier layer against water vapor, aromas, gases and migration of substances causing smells, by vaporization of metals and/or organic or inorganic oxides. The 3B film can be metallised preferably with aluminium or coated with stainless steel or an other metal, but also coated with ceramics, preferably with silicon oxide or aluminium oxide.

The lid film according to the present invention is preferably used in the form of peelable closing membranes for closing containers containing foodstuff-product, preferably yoghurt and suchlike dairy products.

Further advantages, features and details of the invention are revealed in the following description of preferred exemplary embodiments and with the aid of the drawing which shows schematically in
- Fig. 1: the layer composition of a conventionally manufactured lid film according to the prior art;
- Fig. 2: the layer composition of a lid film manufactured according to the present invention;
- Fig. 3: the layer composition of another lid film manufactured according to the present invention.

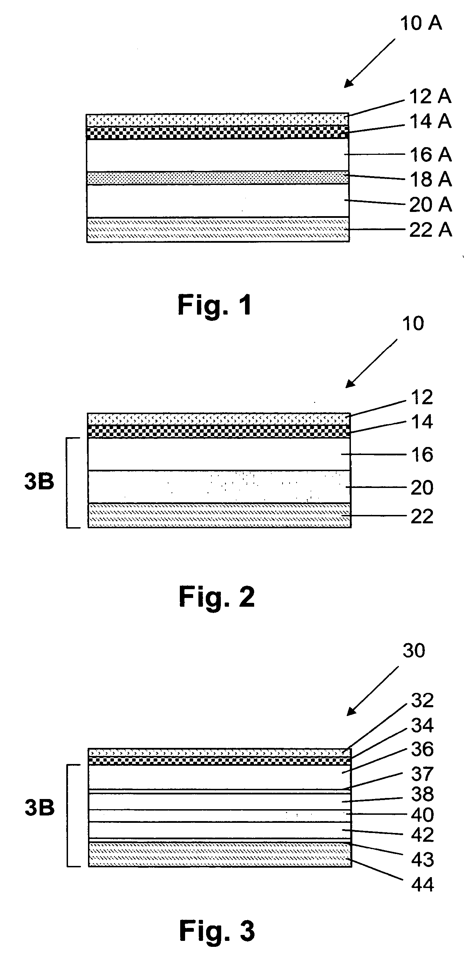

A conventionally manufactured lid film 10A according to the prior art shows in Fig. 1 the following layer configuration:
- 12 A: Protective lacquer layer
- 14 A: Printing
- 16 A: First PET film, white, biaxially oriented
- 18 A: Adhesive layer
- 20 A: Second PET film, transparent, biaxially oriented
- 22 A: Sealing lacquer layer

In the production of the lid-film 10 A, at first the white first PET film 16 A serving as printing support is printed, and thereafter the protective lacquer layer 12 A is applied onto the printing. The printing 14 A with the protective lacquer layer 12 A forms the later outer side of the lid film 10 A. The transparent second PET film 20 A is provided on one side with the thermo sealing layer 22 A and subsequently bonded to the printed white PET-film 16 A via adhesive layer 18 A.

A lid film 10 manufactured according to the present invention and corresponding to the conventionally produced lid film 10 A according to the prior art shows in Fig. 2 the following layer configuration:
- 12: Protective lacquer layer
- 14: Printing
- 16: First PET layer, white
- 20: Second PET layer, transparent
- 22: Sealing layer

In the production of the lid film 10 according to the present invention, at first a biaxially oriented 3B film (see Fig. 2) is manufactured by coextruding transparent PET, white PET and a further plastic material forming later the sealing layer (e.g. EVA when sealing to PS, and PP when sealing to PP). After manufacturing the lid film 10 in the described manner the white PET layer 16 is printed and the printing 14 is overlacquered with the protective lacquer 12.

Another lid film 30 manufactured according to the present invention shows in Fig. 3 the following layer configuration:
- 32: Protective lacquer layer
- 34: Printing
- 36: PET layer, white or transparent
- 37: tie layer
- 38: first PA layer
- 40: EVOH layer
- 42: second PA layer
- 43: tie layer
- 44: Sealing layer

In the production of the lid film 30 according to the present invention, at first a biaxially oriented 3B film (see Fig. 3) is manufactured by coextruding PET, tie layer, PA, EVOH, PA, tie layer and a further plastic material forming later the sealing layer (e.g. EVA when sealing to PS, and PP when sealing to PP). After manufacturing the lid film 30 in the described manner the PET layer 36 is printed and the printing 34 is overlacquered with the protective lacquer 32.

## Claims

1. Lid film for closing containers, with a biaxially oriented plastic layer as outer layer and a sealable layer as inner layer, and optionally at least one middle layer,
**characterized in that**
the outer layer, the inner layer and, if present, the middle layer/s are coextruded to form a biaxially oriented 3B film, and the lid film has a maximum degree of shrinking of 2% at most when exposed to 140 °C.

2. Lid film according to claim 1, **characterized in that** the 3B film has a maximum degree of shrinking of 1% at most, if exposed to 140 °C.

3. Lid film according to claim 1 or 2, **characterized in that** the 3B film has one of the following layer constructions:
PET_{white} : sealing layer
PETₜᵣₐₙₛₚₐᵣₑₙₜ : sealing layer
PET_{white} : PETₜᵣₐₙₛₚₐᵣₑₙₜ : sealing layer
PETₜᵣₐₙₛₚₐᵣₑₙₜ : PET_{white} : sealing layer

4. Lid film according to claim 3, **characterized in that** a tie layer is arranged between the sealing layer and the adjacent PET layer.

5. Lid film according to claim 1 or 2, **characterized in that** the 3B film has one of the following layer constructions:
PET_{white} : PA : EVOH : PA : t : sealing layer
PETₜᵣₐₙₛₚₐᵣₑₙₜ : t : PA : EVOH : PA : t : sealing layer where t is a tie layer

6. Lid film according to claim 4 or 5, **characterized in that** the tie layer is a material on the basis of maleic acid anhydride (MAH), acrylate or carbonic acid.

7. Lid film according to one of claims 1 to 6,
**characterized in that** the sealing layer is a material selected from the group of homo- or copolymers consisting of polyolefines (PO), particularly polyethylene (PE) or polypropylene (PP), polyamide (PA), polyesters, as well as ionomeres (ION), hotmelt adhesive, particularly on the basis of ethylene vinylacetate copolymer (EVA), ethylene butyl acrylate (EBA), ethylene methyl acrylate (EMA), and blends of the aforementioned materials.

8. Lid film according to one of claims 1 to 7,
**characterized in that** the 3B film is printed and/or covered with a thermal protective lacquer.

9. Lid film according to one of claims 1 to 8,
**characterized in that** the 3B film is metallised, preferably with aluminium or with stainless steel.

10. Lid film according to one of claims 1 to 8,
**characterized in that** the 3B film is coated with a ceramic material, preferably with silicon oxide or aluminium oxide.

11. Use of a lid film according to one of the preceding claims for closing containers by sealing.

12. Use according to claim 11 for closing containers, containing foodstuff, preferably yoghurt and suchlike dairy products.

13. Process for manufacturing a lid film for closing containers, with a biaxially oriented plastic layer as outer layer and a sealable layer as inner layer, and optionally at least one middle layer,
**characterized in that**
the outer layer, the inner layer and, if present, the middle layer/s are coextruded to form a biaxially oriented triple bubble (3B) film, and time and temperature in the third bubble are selected to achieve a maximum degree of shrinking of the 3B film of 2% at most when the lid film is exposed to 140 °C.

14. Process according to claim 13, **characterized in that** the 3B film has a maximum degree of shrinking of 1% at most when exposed to 140 °C.

15. Process according to claim 13 or 14, **characterized in that** the 3B film is printed and/or provided with a thermal protective lacquer.

16. Process according to one of claims 13 to 15,
**characterized in that** the 3B film is metallised, preferably with aluminium or stainless steel.

17. Process according to one of claims 13 to 15,
**characterized in that** the 3B film is coated with a ceramic material, preferably with silicon oxide or aluminium oxide.
